(19) Europäisches Patentamt
European Patent Office
Office européen des brevets

(11) Veröffentlichungsnummer: **0 003 299**
**B1**

(12) # EUROPÄISCHE PATENTSCHRIFT

(21) Anmeldenummer: 79100100.1

(51) Int. Cl.³: C 07 F 7/08

(22) Anmeldetag: 15.01.79

(54) **Silylester der Perfluoralkansulfonsäuren sowie Verfahren zu deren Herstellung**

(30) Priorität: 25.01.78 DE 2803125

(43) Veröffentlichungstag der Anmeldung: 08.08.79 Patentblatt 79/16

(45) Bekanntmachung des Hinweises auf die Patenterteilung: 29.10.80 Patentblatt 80/22

(84) Benannte Vertragsstaaten: BE DE FR GB IT NL

(56) Entgegenhaltungen:
CHEMICAL ABSTRACTS, vol. 73, no. 23, 1970, Artikel 120709s, Columbus, Ohio, U.S.A.
CHEM. BERICHTE, Jahrg. 103, Seiten 868—879 (1970)

(73) Patentinhaber: BAYER AG
Zentralbereich Patente
Marken und Lizenzen
D - 5090 Leverkusen 1
Bayerwerk (DE)

(72) Erfinder: Finke, Ulrich, Dr.
Hermann-Löns-Weg 15
D - 7505 Ettlingen (DE)
Moretto, Hans-Heinrich, Dr.
Formesstrasse 13
D - 5000 Köln 80 (DE)
Niederprüm, Hans, Dr.
Hofstrasse 27
D - 4019 Monheim (DE)
Vorbrüggen, Helmut, Prof. Dr.
Wilkestrasse 7
D - 1000 Berlin 27 (DE)

EP 0 003 299 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Silylester der Perfluoralkansulfonsäuren sowie Verfahren zu deren Herstellung

Die vorliegende Erfindung bedrifft neue Silylester von Perfluoralkansulfonsäuren der allgemeinen Formel

$$C_nF_{2n+1}SO_3Si\ R^1R^2R^3 \qquad (I)$$

wobei $R^1$, $R^2$, $R^3$—gleich oder verschieden—für einen geradlinig oder verzweigten Alkylrest mit 1—6 C-Atomen stehen und n eine ganze Zahl von 1—12, jedoch von 3—12, wenn $R^1$, $R^2$ und $R^3$ jeweils für Methyl stehen, bedeutet. Die vorliegende Erfindung betrifft ferner ein Verfahren zur Herstellung der Verbindungen I.

Von den Trialkylsilylestern der Perfluoralkansulfonsäure sind bisher nur die Trimethylsilylester der Trifluoromethansulfonsäure und der Pentafluoräthansulfonsäure bekannt (vgl. z.B. Chem. Ber. *103*, S. 868 (1970). Trimethylsilyltrifluormethansulfonat—auch kurz "Triflat" genannt—ist ein wertvolles Silylierungsagens und wird auch als Katalysator bei Nucleosidsynthesen eingesetzt (vgl. z.B. Synthesis *4*, 259 (1976), DT—OS 2 508 312).

Hergestellt wurde das "Triflat" bisher z.B. durch Umsetzung von Silber- oder Quecksilbertrifluormethansulfonat mit Trimethylchlorsilan (Chem. Ber. l.c.) oder durch Umsetzung von Trifluormethansulfonsäure mit Trimethylchlorsilan (z.B. Naturforschung B 27, 4448 (1972). Nachteilig bei diesen Verfahren ist, daß sie relative aufwendig sind oder keine befriedigenden Ausbeuten ergeben.

Gegenstand der vorliegenden Erfindung ist nun neben einer Reihe neuer Silylester von perfluoralkansulfonsäuren ein Verfahren zur Herstellung von Silylestern der Perfluoralkansulfonsäure der allgemeinen Formel

$$C_nF_{2n+1}SO_3Si\ R^1R^2R^3$$

wobei $R^1$, $R^2$ und $R^3$—gleich oder verschieden—für einen niederen Alkylrest mit 1—6 C-Atomen stehen und n eine ganze Zahl von 1—12 bedeutet, welches dadurch gekennzeichnet ist, daß man ein Silan der allgemeinen Formel

$$R^1R^2R^3R^4Si$$

wobei $R^1$, $R^2$ und $R^3$ die genannte Bedeutung besitzen und $R^4$ für Methyl steht, mit einer Perfluoralkansulfonsäure der allgemeinen Formel

$$C_nF_{2n+1}SO_3H \qquad (n=1—12)$$

umsetzt.

Überraschenderweise hat sich herausgestellt, daß Perfluoralkansulfonsäuren mit Methyl-alkylsilanen in nahezu quantitativer Ausbeute zu den gewünschten Estern führen. Dies ist vor allem überraschend, da in der Literatur bislang stets die Ansicht vertreten wurde, daß z.B. Tetramethylsilan nicht mit Trifluormethansulfonsäure umzusetzten ist (vgl. z.B. Chem. Ber. l.c. oder Chem. Reviews 1977, Vol. 77, No. 1 S. 69—92).

Der Vorteil des erfindungsgemäßen Verfahrens besteht weiter darin, daß auch die höheren Ester in guter Ausbeute zur Verfügung gestellt werden können.

Der Vorteil der erfindungsgemäßen Verbindungen gegenüber den bereits bekannten Substanzen besteht darin, daß mit steigender Anzahl der C-Atome, insbesondere ab 5 C-Atomen im Perfluoralkylrest, eine erhöhte silylierende Wirkung eintritt. Silylester der Perfluoralkansulfonsäure mit $R^1$ und $R^2$ = Methyl und $R^3 = C_nH_{2n}+1$ (n=2—6) sind starke Silylierungsreagenzien, die zu Silyläthern oderestern mit z.B. erhöhter Hydrolysestabilität führen (im Vergleich zu den bisher mit den bekannter Trimethylsilyl-"Flatten" zugänglichen Silyläthern bzw. -estern). Als Ausgangsprodukt für das erfindungsgemäße Verfahren dienen Methylalkylsilane, wie Tetramethylsilan (TMS), Butyltrimethylsilan, Dibutyldimethylsilan, Pentylbutyldimethylsilan, Isopentylbutyldimethylsilan, Äthyltrimethylsilan, Tripropylmethylsilan.

Derartige Silane sind z.B. zugänglich über die Direktsynthese (nach dem sog. Müller-Rochow-Verfahren), über metallorganischen Synthesen (z.B. Grignard-Reaktion) oder über Hydrosilylierungsverfahren.

Perfluoralkensulfonsäuren sind technische Produkte und sind über die Elektrofluorierung von Alkansulfonylfluoriden, und anschließende Umsetzung mit wäßrigem Alkali und $H_2SO_4$ zugänglich. Beispiele für perfluoralkansulfonsäuren sind $CF_3SO_3H$, $C_4F_9SO_3H$, $C_8F_{17}SO_3H$.

Das erfindungsgemäße Verfahren kan sowohl mit als auch ohne Lösungsmittel durchgeführt werden. Es sind im allgemeinen alle Lösungsmittel zu verwenden, die mit der Sulfonsäure selbst keine Reaktion eingehen wie Pentan, Hexan, Cyclohexan, Petroläther oder Benzol.

Die Temperatur, bei der das erfindungsgemäße Verfahren durchgeführt wird, liegt vorzugsweise unterhalb des Siedepunktes des Tetraalkylsilans, insbesondere bei $-30°C$ bis $+60°C$.

Vorzugsweise wird das erfindungsgemäße Verfahren beim Druck der umgebenden Atmosphäre durchgeführt, weil dies den gering sten Aufwand erfordert. Falls erwünscht, können jedoch auch höhere oder niedrigere Drücke angewandt werden.

Die bei dem erfindungsgemäßen Verfahren erzielten Umsätze betragen im allgemeinen 90—100%, bezogen jeweils auf den in der geringsten Menge eingesetzten Reaktionsteilnehmer. In der Regel wird das Tetraalkylsilan im Überschuß (bis etwa 20%) eingesetzt und nach beendeter Reaktion überschüssiges Silan abgezogen; eine Destillation des Produktes erübrigt sich aufgrund der anfallenden Reinheit in den

meisten Fällen. Nicht umgesetztes Tetraalkylsilan kann erneut bei dem erfindungsgemäßen Verfahren eingesetzt werden.

Das erfindungsgemäße Verfahren soll anhand der folgenden Beispiele näher erläutert werden.

Beispiel 1

In einem 1 Liter-Dreihalskolben mit Rückflußkühler, Innenthermometer und Tropftrichter werden zu 1 Mol $CF_3SO_3H$ unter Rühren bei 0°C 1,15 Mol Tetramethylsilan getropft. Die Reaktionstemperatur wird bei 10°C gehalten. Nach beendeter methanentwicklung wird das überschüssige Tetramethylsilan abgezogen. Das Reationsprodukt ist 19 F und 1H—NMR—spektroskopisch reiner Trifluormethanasulfonsäure (Kp. 140° (750 Torr).

Beispiel 2

Die Umsetzung von $C_4F_9SO_3H$ mit Tetramethylsilan erfolgte analog Beispiel 1.
Ausbeute = 92% $C_4F_9SO_3Si(CH_3)_3$ Sdp. 70°C/10 Torr 1,H—NMR: $Si(CH_3)_3$; 29 Hz-Singulett.

Beispiel 3

Umsetzung von $C_8F_{17}SO_3H$(fest) mit Tetramethylsilan bei 15—20°C, sonst analog Beispiel 1.
Ausbeute = 90% $C_8F_{17}SO_3Si(CH_3)_3$, Sdp. 70—90°C/1,1 Torr, 1H—NMR: $Si(CH_3)_3$-Singulett 29 Hz.

Beispiel 4

Umsetzung von Trimethylbutylsilan mit $C_4F_9SO_3H$ bei 20°C. Das Umsetzungsprodukt wurde NMR-sprektoskopisch als $(CH_3)_2(C_4H_9)SiOSO_2C_4F_9$ identifiziert.
Ausbeute > 90%, 1H—NMR: $Si(CH_3)_2$-Singulett 27,5 Hz; $SiC_4H_9$-Multiplett 37—96 Hx.

Beispiel 5

Umsetzung von $C_4F_9SO_3H$ mit $(CH_3)_2(C_4H_9)_2Si$, Produktidentifizierung analog Beispiel 4: $Ch_3(C_4H_9)_2SiOSO_2C_4F_9$.
Ausbeute: 90%, 1H—NMRL:
$SiCH_3$ 27,5 Hz Singulett;
$Si(C_4H_9)_2$ Multiplett von 40—125 Hz.

Beispiel 6

$C_4F_9SO_3H + Me_2(C_4H_9)Si(C_5H_{11})$; Produktidentifizierung analog Beispiel 4:
$Me(C_4H_9)(C_5H_{11})SiOSO_2C_4F_9$.
Ausbeute: 90%, 1H—NMR:
$SiCH_3$Singulett 27,5
$SiC_4H_9$
$SiC_5H_{11}$ Multiplett von 40—120.

Beispiel 7

$C_4F_9SO_3H + (CH_3)_3Si(C_5H_{11})$: Produktidentifizierung analog Beispiel 4: $(CH_3)_2(C_5H_{11})SiO-SO_2C_4F_9$.
Ausbeute: 91%, 1H—NMR:
Sime$_2$ 27,5 Hz Singulett
$SiC_5H_{11}$ 52—145 Hz Multiplett.
$^1$H—NMR—Gerät: 60 MHz; TMS = 0 liz.

**Patentansprüche**

1. Verfahren zur Herstellung von Perfluoralkansulfonsäureestern der allgemeinen Formel

$$C_nF_{2n+1}SO_3Si\ R^1R^2R^3$$

wobei $R^1$, $R^2$, $R^3$—gleich oder verschieden—für einen geradlinig oder verzweigten Alkylrest mit 1—6 C-Atomen stehen und n eine ganze Zahl von 1—12 bedeutet, dadurch gekennzeichnet, daß man ein Silan der Formel

$$R^1R^2R^3R^4Si$$

wobei $R^1$, $R^2$, $R^3$ die genannte Bedeutung haben und $R^4$ für Methyl steht, mit einer Perfluoralkansulfonsäure

$$C_nF_{2n+1}SO_3H \quad (n = 1—12)$$

umsetzt.

2. Verfahren nach Anspruch 1, dadurch gekennzeichnet, daß man als Silan Tetramethylsilan einsetzt.

3. Perfluoralkansulfonsäuretrialkylsilylester der allgemeinen Formel

$$C_nF_{2n+1}SO_3Si\ R^1R^2R^3$$

wobei $R^1$, $R^2$ und $R^3$ die oben genannte Bedeutung besitzen und n eine ganze Zahl von 1—12, jedoch von 3—12, wenn $R^1$, $R^2$ und $R^3$ jeweils für methyl stehen, bedeutet.

4. Perfluoralkansulfonsäuretrialkylsilylester gemäß Anspruch 3, dadurch gekennzeichnet, daß n für 5, 6, 7 oder 8 steht.

**Claims**

1. Process for the preparation of perfluoroalkanesulphonic acid esters of the general formula

$$C_nF_{2n+1}SO_3Si\ R^1R^2R^3$$

wherein
$R^1$, $R^2$ and $R^3$ are identical or different and represent a straight-chain or branched, alkyl radical with 1—6 C atoms and n denotes an integer from 1—12
characterized in that a silane of the formula

$$R^1R^2R^3R^4Si$$

wherein
$R^1$, $R^2$ and $R^3$ have the meaning indicated and $R^4$ represents methyl
is reacted with a perfluoroalkanesulphonic acid

$$C_nF_{2n+1}SO_3H \qquad (n=1—12)$$

2. Process according to claim 1, characterized in that tetramethylsilane is employed as the silane.

3. Perfluoroalkanesulphonic acid trialkylsilyl esters of the general formula

$$C_nF_{2n+1}SO_3Si\ R^1R^2R^3$$

wherein

$R^1$, $R^2$ and $R^3$ have the above-mentioned meaning and n denotes an integer from 1—12; however, if $R^1$, $R^2$ and $R^3$ each represent methyl then n denotes an integer from 3—12.

4. Perfluoroalkanesulphonic acid trialkylsilyl esters according to claim 3, characterized in that n represents 5, 6, 7 or 8.

**Revendications**

1. Procédé de fabrication d'esters d'acides perfluoroalcane-sulfoniques de formule généale:

$$C_nF_{2n+1}SO_3Si\ R^1R^2R^3$$

dans laquelle $R^1$, $R^2$, $R^3$, identiques ou différents, représentent un radical alcoyle à chaîne droite ou ramifiée ayant 1 à 6 atomes de carbone et n un nombre entier de 1 à 12, caractérisé en ce qu'on fait réagir un silane de formule:

$$R^1R^2R^3R^4Si$$

dans laquelle $R^1$, $R^2$, $R^3$ ont la signification indiquée et $R^4$ représente un méthyle, avec un acide perfluoroalcane-sulfonique

$$C_nF_{2n+1}SO_3H \quad (n = 1—12)$$

2. Procédé selon la revendication 1, caractérisé en ce qu'on utilise comme silane du tétraméthylsilane.

3. Ester trialcoylsilylique d'acide perfluoroalcane-sulfonique de formule générale:

$$C_nF_{2n+1}SO_3Si\ R^1R^2R^3$$

dans laquelle $R^1$, $R^2$ et $R^3$ possèdent la signification indiquée plus haut et n signifie un nombre entier de 1 à 12, toutefois de 3 à 12 lorsque $R^1$, $R^2$ et $R^3$ représentent chacun un méthyle.

4. Ester trialcoylsilylique d'acide perfluoroalcane-sulfonique suivant la revendication 3, caractérisé en ce que n signifie 5, 6, 7 ou 8.